# EUROPEAN PATENT SPECIFICATION

(11) **EP 1 633 953 B1**
(45) Date of publication and mention of the grant of the patent: **04.04.2007**
(21) Application number: 04725848.8
(22) Date of filing: 05.04.2004
(51) Int. Cl.: C09K 8/52

(54) **SUBSTANCES TO STIMULATE THE EXTRACTION OF CRUDE OIL AND A METHOD OF PROCESSING THEM**
DIE GEWINNUNG VON ROHÖL STIMULIERENDE SUBSTANZEN UND VERFAHREN FÜR DEREN WEITERVERARBEITUNG
SUBSTANCES POUR STIMULER L'EXTRACTION DE PETROLE BRUT ET LEUR METHODE DE TRAITEMENT

(30) Priority: 13.06.2003 RO 200300519
(43) Date of publication of application: 15.03.2006
(73) Proprietor: Slemcu, Nicolae, Bucuresti (RO); Vasiliu, Mircea Ioan Razvan, Bucuresti (RO); Toanchina, Cristian Dragos, Bucuresti (RO)
(72) Inventor: Slemcu, Nicolae, Bucuresti (RO); Vasiliu, Mircea Ioan Razvan, Bucuresti (RO); Toanchina, Cristian Dragos, Bucuresti (RO)
(74) Representative: Enescu, Lucian
(86) International application number: PCT/RO2004/000008
(87) International publication number: WO 2004/111383

(56) References cited:
- EP-A- 0 737 798
- US-A- 3 276 519

## Description

This invention refers to compositions for stimulating the extraction of crude oils, especially paraffin heavy crude oils, de-clogging the route and the abutting deposits of the oil well by changing the rheology of the deposit and solubilization of the aggregates comprising paraffin resins on the oil well circulation route, using a chemical vector similar to the prodrugs in the medicaments industry.

There are known compositions intended to de-clog the extraction pipes that are mainly represented by three categories :
- water detergents emulsions
- solvents obtained by oil refining
- solutions obtained by coke distillation.

It is already known that crude oil has a broad composition (from easily volatile fraction, solvents, benzenes up to paraffines and asphaltenes, also known under the generic name of "Go-deville wax").

During the well functioning, there are generated local pressure changes and sections with temperature variations sufficient to form, on the circulation pipes (column and tubing), local depots and final obturations capable to stop or render more difficult the liquid phase circulation within crude oil.

In time, an increase in thickness of the crude oil is also produced in the deposit, in the abutting area, around the oil well and that come in the long run from the extraction of the fluid phase; the layer thickness being of from 10-15 cm to 1-2 m and said layer being made of paraffin formation clogs diminishing the liquid phase afflux to the oil well pump. There are already known processes and methods, that lead to the diminishing of these effects by using some chemical solvents solutions or watery detergents solutions which allow the fluidization of the area abutting the oil well and facilitate the liquid phase flow.

The chemical solutions which use organic solvents present the disadvantage that, having a density of 0.6 to 0.8 g/cm³, they lead to the fact that, being set free from the oil-well perforations in the abutting area, they rise to the higher part, therefore in the un-perforated area of the oil well, and they do not act in the active area, as they are released from the well perforations in the deposit abutting area.

Watery detergents solutions act by flowing out, downward the deposit, said solutions having a density of 1 gr/cm³ (higher than the crude oil's density), yet the new created interfaces are not covered by a blister and paraffins are just as much active as others, so they reunite the paraffin clogs, after the watery detergent solution passes by
On the other hand, the water that was let in maintains itself neutral and this is not to be found within the extraction as useful fraction, meanwhile the coal oil, that was proposed as chemical vector in order to form the solutions, can be processed in refineries and, that way, it enriches the distillates one with valuable cyclic fractions.
Thus due to the fused-cycle breaking of the coal oil, there may be obtained ecological gasoline of high octane number, directly from refining, unless the percentage of oil that the crude oil enters the refinery is adjusted.

The technical problem solved by the present invention is that of realizing a new composition for stimulating the oil extraction comprising fractions from the distillation of solvent enriched coal oils detergents, acids (or acidic substances) or alkali, gas-generating ammonium salts, all of them having a superior effect in stimulating the extraction and improving the flowing reology.

This invention has a special ecological component, meaning that it proposes an excellent method for processing and extracting of some very strong pollutants such as naphthalene, anthracene and, also, other creosols, by introducing them into the oil deposit and by converting them into useful compounds by "in situ" reactions.

Any draining (degrading) technological process of such pollutants on the Earth (soil) surface is more polluting than the introduction into the oil deposit, without other material or energetic consumption.

The selected oil comprises a combination of distillation fractions for coke coal-oils according to this invention and, it must have a density ranging from 1.15 to 1.17gr/cmc in order to represent a perfect vector for the already formed chemical solutions. It means that there can be selected fractions of creosote oil or of the impregnation oil, as well as of the polymerization oil, such that their mixture fulfill the chemical vector condition.

The base composition representing a chemical vector, is formed by three fractions resulted from the coke coal-oil distillation, just the way they were defined by STAS3261/87 and, characterized by the boiling point, the typical weight and main chemical composition, already being known that by industrial distillation there are obtained mixtures, such as: :
- *fraction 1* - comprising the so-called (technical name) "phenolic oil", having a distillation range from 170°C to 190°C, and a density of from 1.15 to 1. 2g/cm³ and mainly containing creosol, naphthalene and anthracene with various chemical radicals attached thereto;
- *fraction 2 -* comprising the so-called (technical name) "absorption oil" according to STAS 3362) having a distillation range from 250-270°C, a density of from 1.19 to 1.22g/cm³ and also containing phenanthene, fluorene, carbosols, fluoranthene
- *fraction 3 -* known under the technical denomination of "polymerization oil" ; having a distillation range of from 320 to 350°C a density of from 1.20 to 1.23g/cm³ and being chemically constituted of pyrenes, acenaphthenes and crysenes.

The composition comprising 30% v/v *fraction 1* solution of phenolic oil, in admixture with 30% v/v *fraction 2* solution of absorbtion oil and 30% v/v *fraction* 3 technically denominated polymerization oil, forms the base solution, called chemical vector, to be completed with 10% supplement formed of substances (classes of substances) brought from outside the distillation process, called the vector charge.

The main chemical composition, so it was called as "chemical vector", contains numerous substances which can be characterized as very intense pollutants and, according to the invention, it results from the tar distillates, and has the generic name of "mineral coal oil". The chemical composition of the mineral coal oil is broad and it depends on the processed coal's quality and on the technology employed by the producing chemical coking plant. By taking over the chemical analyses from more mineral coal oil batches and ignoring the compounds which have a under 2% weight, we can learn that the following ones are really important.
Gas Analysis.

| **Compound** | **Weight** |
|---|---|
| Naphthalene | 10 - 14% |
| Acenaphthene | 8 - 10% |
| Fluorenes | 16 - 20% |
| Fluoranthrenes | 8 - 9% |
| Pyrenes | 10 - 12% |
| Antracene | 8 - 12% |

Each fraction has an important role in the physical and chemical behavior of the chemical vector, given the crude oil and the paraffin formations comprised by said crude oil..
- phenolic oil has an important role in penetrating the paraffin formations being also an adequate solvent and having a higher density than water has;
- absorption oil creates inert areas that are incompatible (from the chemical point of view) with the paraffin formations, such that they do not stick together anymore as it is the case of solvents. In crude oil, these are maintaining active areas between paraffin formations (paraffin clogs), areas that reunite said formation increasing the paraffin clog.
- the gas-generating substances, such as the ammonium salts (sulfates and carbonates), are able to decompose below 70°C, thus creating gases which will radically change the flow rheology of crude oil
- detergents and tension active substances which (2% of the volume or 20% of the total chemical charge) will stabilize the new reological routes and will improve the flow of the paraffin formations, by separating them from the inorganic phases.

The treatment composition formed by the chemical vector (an admixture of the three oils, at a 1 :1 ratio), chemically charged with a 10% supplement by volume of either acidic substances or solvents, or detergents or gas generating substances or any combination thereof, must finally have a density of 1.10 up to 1.12 g/cm³

According to this invention, the treatment process consists in that the composition is introduced, under pressure, into the blocked extraction pipes or into the deposit whose flowing flux significantly dropped to the pressure of 70 - 80 bars (limit pressure resistance for the pipes/column/tubing) and, in case the un-blocking cannot be performed, it is maintained under pressure for 4 to 8 hours and, the treatment is thereafter re-started, unless a significant decrease in tension is registered, denoting an un-blockin of the circuit.

According to the invention, the composition and the process have the following advantages:
- use of a solution passing for a useful material during the refining process;
- high efficiency due to its chemical vector character which was constituted when the mixture was formed;
- the solution is accessible and its use also presents the aspect of environmental preserving as the oil is not used at land surface, where it can produce serious pollution effects;
- the reduction of the intervention rhythm at the oil well due to the solution prolonged time of action ;
- there is no need for special equipment for carrying out the treatments;
- it has no undesired secondary effects (metallic corrosion or a emulsifying of the valuable constituents in the crude oil);
- from the oil solution used at injection in refineries there are obtained gasoline of high octane number and semiacicular coke.

There is further provided an embodiment example of the composition and of the process according the invention,

### Example No.I :

The composition for the treatment process used for in-layer technological injection, as well as the one that is used for broaching the column system is represented by the following volume percentages:
- 30% v/v phenolic oil from the first fraction
- 30% v/v absorption oil
- 30% v/v polymerized oil
- 2% v/v ammonium carbonate
- 5% v/v ethoxilated noniphenol with 5 to 9 ethoxy groups
- 3% v/v phenol

In case of oil wells having a weak liquid aflux, as there is a blocking due to the paraffin depots at the perforation level or on the column tubes, there will be carried out an un-blocking treatment process using the above mentioned solution, at a ratio of a 5m³ solution / perforated meter or, in case of blocking the pipes, at the maximum pressure limited by the tubing material of 70 - 90 bars, until the route is un-blocked. If a substantially improved circulation is not noticed after 5 - 8 hours, the solution is taken out by purging into the hub and the treatment is re-started, until the effective un-blocking of the well is achieved.

Using laboratory analysis, another [type] range of coal oils can be chosen from their distillation, with the proviso that their specific density is areater than 1.08, and the formed vector charges with [reactive] reagents (solvents, detergents, etc), given the proposed aim and the characteristics of the deposit submitted to treatment.

## Claims

1. Composition for treating crude-oils, **characterized in that** it comprises a phenolic oil in an amount of 20%(v/v) to 30%(v/v) based on the total composition volume, phenolic oil which is a distillation fraction having a distillation temperature ranging from 170°C to 190°C; an absorption oil in an amount of 20%(v/v) to 30%(v/v) based on the total composition volume, absorption oil which is a distillation fraction having a distillation temperature ranging from 250 to 270°C; a polymerization oil in an amount of 20%(v/v) to 30%(v/v) based on the total composition volume, polymerization oil which is a distillation fraction having a distillation temperature ranging from 320 to 350°C, and up to 100% (v/v) a mixture of chemical additives, said mixture containing either an acidic substance or a surfactant, or a gas generator, or a solvent, or any combination thereof, the density of the composition ranging between 1.10 to 1.12 g/cm³.

2. Composition according to claim 1, **characterized in that** the volumetric ratio of the phenolic oil, absorption oil and polymerization oil being preferably of 1:1:1.

3. Composition according to claim 1, or claim 2, **characterized in that** the phenolic oil preponderantly comprises cresols, naphthalenes and anthracenes with various chemical radicals attached thereto and has a density ranging from 1.15 to 1.20 g/cm³; the absorption oil preponderantly contains phenanthrene, fluorine, carbosols and fluoranthrene and has a density ranging from 1.19 to 1.22 g/cm³ and, the polymerization oil preponderantly contains pyrene, acenaphthenes and chrysenes, and has a density ranging from 1.20 to 1.23 g/cm³.

4. Composition according to claim 1, **characterized in that** the mixture of chemical additives preferably consists of 25%(w/w) surfactant, preferably nonylphenol ethoxilated with 5 to 9 ethoxy groups; 10% (w/w) gas generating substance, preferably consisting of ammonium salts selected from ammonium sulphates or carbonates which are decomposed at a temperature less than 70°C causing the generation of gases: 15%(w/w) an acidic substance, preferably phenol and, up to 100% (w/w) a solvent.

5. Composition according to claim1 and claim 4, **characterized in that** it comprises phenolic oil in an amount of 30% (v/v), absorption oil in an amount of 30% (v/v), polymerization oil in an amount of 30% (v/v), and a chemical additive mixture in an amount of 10% (v/v) based on the total composition volume, said mixture comprising 10% (w/w) ammonium carbonate, 25% (w/w) nonylphenol ethoxilated with 5 to 9 ethoxy groups, 15%(w/w) phenol and up to 100% a solvent, based on the total mixture weight.

6. Process for treating crude-oil in order to stimulate extraction by de-clogging the route and the abutting deposits of the oil well, which is applied by the use of the composition according to claim 1, **characterized in that** a composition defined in claim 1 is injected under pressure preferably having a value of 70 to 90 bar through a tubing or through a production casing for crude-oil exploitation through a well which penetrates and opens a productive crude oil-field, followed by ceasing the fluid extraction through the tubing for 4 to 8 hours, and thereafter the well is started up.

7. Process according to claim 6 **characterized in that** in the tubing or in the production casing there is injected an amount of the composition defined in claim 1 which should ensure a distribution preferably of 5m³ of solution / meter of perforated tubing portion.

8. Process for treating crude-oil in order to stimulate extraction by de-clogging the route and the abutting deposits of the oil well, which is applied by the use of the composition according to claim1, carried out in another variant, **characterized in that** a composition according to claim 1 is injected through a line for conveying the crude-oil extracted through a well, in case of blocking the flow therethrough, the injection being carried out with a maximum pressure value which is limited by the pressure the tubing can withstand, and the pressure value is maintained within the line for 4 to 8 hours.

9. Process for treating the crude-oils according to claim 6 or claim 8, **characterized in that**, in the situation in which after 4 to 8 hours the crude oil circulation is not restored to the normal parameters, the composition injected into the tubing or in the line is extracted and then, the composition according to claim 1 is injected again.

## Patentansprüche

1. Zusammensetzung zum Behandeln von Erdölen, **dadurch gekennzeichnet, dass** ein phenolisches, eine Destillationsfraktion mit einer sich von 170°C bis zu 190°C erstreckenden Verdampfungstemperatur darstellendes Öl, in einem Anteil von 20 Volumen-% bis zu 30 Volumen-% berechnet auf das gesamte Volumen der Zusammensetzung, ein eine Destillationsfraktion mit einer sich von 250 °C bis zu 270°C erstreckenden Verdampfungstemperatur darstellendes Absorbtionsöl, in einem Anteil von 20 Volumen-% bis zu 30 Volumen-% berechnet auf das gesamte Volumen der Zusammensetzung, ein eine Destillationsfraktion mit einer sich von 320°C bis zu 350°C erstreckenden Verdampfungstemperatur darstellendes Polymerisationsöl, und bis zu 100 Volumen-% eine Mischung chemischer Zusatzstoffe enthält, wobei die genannte Mischund entweder einen säuerlichen Stoff, oder ein Netzmittel, oder ein Gasgenerator, oder ein Lösungsmittel oder eine beliebige Kombination davon umfasst und die Zusammensetzung eine sich von 1,10 bis zu 1,12 g/cm³ erstreckende Dichte aufweist.

2. Zusammensetzung nach dem Anspruch 1, **dadurch gekennzeichnet, dass** das Volumenverhältnis zwischen dem phenolischen Öl, dem Absorbtionsöl und dem Polymerisationsöl vorzugsweise 1:1:1 darstellt.

3. Zusammensetzung nach dem Anspruch 1 oder dem Anspruch 2, **dadurch gekennzeichnet, dass** das phenolische Öl überwiegeng die mit verschiedenen chemischen angeschlossenen Radikalen Kresolen, Naphtalinen und Anthracenen enthält, und eine sich von 1,15 bis zu 1,20 g/cm³ erstreckende Dichte aufweist; dass das Absorbtionsöl überwiegeng Phenanthren, Fluoren, Carbosol und Fluoranthren enthält und eine sich von 1,19 bis zu 1,22 g/cm³ erstreckende Dichte aufweist; und dass das Polymerisationsöl überwiegeng Pyrenen, Acenaphtenen und Chrysenen enthält und eine sich von 1,20 bis zu 1,23 g/cm³ erstreckende Dichte aufweist.

4. Zusammensetzung nach dem Anspruch 1, **dadurch gekennzeichnet, dass** die Mischung chemischer Zusatzstoffe vorzugsweise aus 25 Gewicht-% Netzmiitel, vorzugsweise Nonylphenolethoxylat mit 5 bis 9 Äthoxygruppen; 10 Gewicht-% eines gasbildenden Stoffes, vorzugsweise bestehend aus Ammoniumsalzen, die man aus Ammoniumcarbonat oder -sulfat auswählt, und die sich bei einer Temperatur unter 70°C gasbildend zersetzen lassen; 15 Gewicht-% eines säuerlichen Stoffes, vorzugsweise Phenol; und bis zu 100 Gewicht-% eines Lösungsmittels besteht.

5. Zusammensetzung nach dem Anspruch 1 und dem Anspruch 4, **dadurch gekennzeichnet, dass** das phenolische Öl in einem Anteil von 30 Volumen-%, das Absorbtionsöl in einem Anteil von 30 Volumen-%, das Polymerisationsöl in einem Anteil von 30 Volumen-%, und eine Mischung chemischer Zusatzstoffe in einem Anteil von 10 Volumen-%, alle auf Gesamtvolumen der Zusammensetzung berechnet, enthält, wobei die genannte Mischund aus 10 Gewicht-% Ammoniumcarbonat, 25 Gewicht-% Nonylphenolethoxylat mit 5 bis 9 Äthoxygruppen, 15 Gewicht-% Phenol, und bis zu 100 Gewicht-% einem Lösungsmittel, alle auf Gesamtgewicht der Mischung berechnet, besteht.

6. Verfahren zum Behandeln von Erdölen, um Gewinnung durch Entstopfung der Leitung und aneinander grenzender Ablagerungen der Erdölsonde zu fördern, einsetzbar durch Anwendung der Zusammensetzung nach dem Anspruch 1, **dadurch gekennzeichnet, dass** man eine Zusammensetzung nach dem Anspruch 1, vorzugsweise mit einem von 70 bis 90 bar aufweisenden Druckwert, durch ein Rohr oder eine Förderungsverrohrung der Erdölgewinnung einspritzt, die durchdringt und das Erdölvorkommen freilegt, dass man nachfolgend das Flüßigkeitsabsuagen durch das Rohr für 4 bis 8 Stunden einstellt, und anschließend die Erdölsonde im Betrieb erneut setzt.

7. Verfahren nach dem Anspruch 6, **dadurch gekennzeichnet, dass** durch das Rohr oder die Förderungsverrohrung eine solche Menge der im Anspruch 1 darstellenden Zusammensetzung einspritzt, die eine Verteilung von vorzugsweise 5 m³ Lösung/laufender Meter perforierender Rohrstrecke gewährleistet.

8. Verfahren zum Behandeln von Erdölen, um Gewinnung durch Entstopfung der Leitung und aneinander grenzender Ablagerungen der Erdölsonde zu fördern, einsetzbar in einer anderen Ausführungsform der Anwendung der Zusammensetzung nach dem Anspruch 1, **dadurch gekennzeichnet, dass** man, falls das Durchfließen abgedrosselt wird, die Zusammensetzung nach dem Anspruch 1 in der Förderleitung des aus der Erdölbohrung gewonnenen Erdöls einspritzt, wobei das Einspritzen auf von dem angefertigten Material der Leitung höchstdurhaltendem Druckwert vorgennomen wird, und der Druck für 4 bis zu 8 Stunden aufrechterhalten wird.

9. Verfahren zum Behandeln von Erdölen nach dem Anspruch 6 oder dem Anspruch 8, **dadurch gekennzeichnet, dass** man, falls der Erdölkreißlauf nach 4 bis 8 Studen nicht zu den normalen Werten zurückgebracht wird, die in das Förderrohr oder in die Förderleitung eingespritzte Zusammensetzung absaugt, und anschließend die Zusammensetzung nach dem Anspruch 1 erneut einspritzt.

## Revendications

1. Composition pour le traitement des pétroles brutes **caractérisée en ce qu'** elle comprend d'huile phénolique de 20% à 30% en volume, par rapport au volume total de la composition, ledit huile phénolique représentant une coupe de distillation ayant une température de distillation de 170°C à 190°C, d'huile d'absorption de 20% à 30% en volume, par rapport au volume total de la composition, ledit huile d'absorption représentant une coupe de distillation ayant la température de distillation de 250°C à 270°C, d'huile de polymérisation de 20% à 30% en volume, par rapport au volume total de la composition, ledit huile de polymérisation représentant une coupe de distillation ayant la température de distillation de 320°C à 350°C et jusqu'à 100% en volume d'un mélange d'additifs chimiques, comprenant soit une substance acide soit un surfactant; ou un générateur de gaz; ou un solvant; ou toutes leurs combinaisons; ladite composition ayant une densité de 1,10 à 1,12 g/cm³.

2. Composition selon la revendication 1, **caractérisée en ce que**, le rapport en volume de l'huile phénolique, l'huile d'absorption et l'huile de polymérisation est de préférence de 1:1:1.

3. Composition selon la revendication 1 ou la revendication 2, **caractérisée en ce que** l'huile phénolique est constitué principalement des crésoles; naphtalènes et anthracènes aux différents radicaux chimiques y attachés et, ayant une densité de 1,15 a 1,20 g/cm³; l'huile d'absorption est constitue principalement du phénantrène, fluorène, carbosoles et fluoranthrène et ayant une densité de 1,19 à 1,22 g, et l'huile de polymérisation est constitué principalement du pyrène, acenaphthènes et crysènes, et ayant un densité de 1,20 a 1,23 g/cm³.

4. Composition selon la revendication 1, **caractérisée en ce que** le mélange d'additifs chimiques este constitué, de préférence, de 25% en poids de surfactant, de préférence nonyl phénol étoxylé contenant de 5 a 9 groupements etoxy; de 10% en poids de substance génératrice de gaz, consistant de préférence en sels d'ammonium choisis parmi sulfates ou carbonates qui sont décomposés à une température inférieure a 70 °C en déterminant la formation des gazes; 15% en poids d'une substance acide, de préférence phénol et jusqu'à 100% en poids de solvant.

5. Composition selon la revendication 1 et la revendication 4, **caractérisée en ce que**, elle comprend 30% en volume de l'huile phénolique, 30% en volume de l'huile d'absorption, 30% en volume de l'huile de polymérisation et 10% en volume d'un mélange d'additifs chimiques, par rapport au volume total de la composition, ledit mélange comprenant 10% en poids de carbonate d'ammonium, 25% en poids de nonyl phénol étoxylé contenant de 5 a 9 groupements étoxyl, 15% en poids du phénol et jusqu'à 100% du solvant par rapport au poids total du mélange.

6. Procédé de traitement du pétrole brut pour la stimulation de l'extraction par désencrassement de la voie et des dépôts contiguës du puits de pétrole, qui este mise en oeuvre par l'utilisation de la composition selon la revendication 1, **caractérisé en ce que** une composition selon la revendication 1 este injectée sous pression, de préférence de 70 à 90 bar, à travers un tuyau ou une colonne d'extraction pour l'exploitation du pétrole brut d'un puits qui pénètre et ouvre un champ pétrolier brut productif, et après l'interromption d'extraction du fluide à travers le tuyau pendant 4 à 8 heures, la sonde est remise en marche.

7. Procédé selon la revendication 6, **caractérisé en ce que** dans le tuyau ou dans la colonne d'extraction de la sonde, il est injecté une quantité de la composition selon la revendication 1 qui dois garantir la distribution de préférence de 5 m³ de solution/mètre de portion de tuyau perforé.

8. Procédé de traitement du pétrole brut pour la stimulation de l'extraction par désencrassement de la voie et des dépôts contiguës d'un puits de pétrole, qui est mis en oeuvre par l'utilisation de la composition selon la revendication 1, mis en oeuvre dans une variante alternative, **caractérisé en ce que** une composition selon la revendication 1 est injectée à travers un conduit pour le transport du pétrole brut extrait d'un puits, en cas du blocage d'écoulement à travers de celui-ci, l'injection étant mise en oeuvre à une pression maximale qui est limitée par la pression que le tuyau peut soutenir et; la pression este maintenue dans le conduit, à cette même valeur, pendant 4 à 8 heures :

9. Procédé de traitement du pétrole brut selon la revendication 6 ou la revendication 8, **caractérisé en ce que**, si la circulation du pétrole brut n'est pas rétablie aux paramètres normaux après 4 à 8 heures, la composition qui a été injectée dans le tuyau ou dans le conduit est extraite et puis la composition selon la revendication 1 est de nouveau injectée.
